# EUROPEAN PATENT SPECIFICATION

(11) **EP 3 639 647 B1**
(45) Date of publication and mention of the grant of the patent: **14.04.2021**
(21) Application number: 19203329.8
(22) Date of filing: 15.10.2019
(51) Int. Cl.: A01D 43/08, A01D 41/12, A01D 41/127, A01F 29/12

(54) **CROP RESIDUE SPREAD MONITORING**
ERNTERESTSTREUUNGSÜBERWACHUNG
SURVEILLANCE D'ÉTALEMENT DE RÉSIDUS DE RÉCOLTE

(30) Priority: 19.10.2018 US 201816165592
(43) Date of publication of application: 22.04.2020
(73) Proprietor: Deere & Company, Moline, IL 61265 (US)
(72) Inventor: Vandike, Nathan R, 68163 Mannheim (DE); Readel, Paul, 68163 Mannheim (DE)
(74) Representative: Holst, Sönke

(56) References cited:
- EP-A1- 2 853 143
- WO-A1-2018/162699
- US-A1- 2015 264 864
- US-A1- 2017 086 373
- US-A1- 2018 084 718

## Description

This invention relates generally to agricultural combines. In particular, it relates to systems for monitoring crop residue.

### Background

Agricultural harvesters such as combines or windrowers, travel through fields of agricultural crop harvesting the crop. In one common arrangement, agricultural harvesting heads extend forward from the spreading mechanism agricultural harvester to engage the plant stalks, sever them, and carry the severed crop into the body of the agricultural harvester itself for further processing.

Threshing, cleaning and separating mechanisms inside the agricultural harvester are provided to separate grain from material other than grain (MOG), such as straw.

Once separated, the material other than grain (MOG) is carried to the rear of the combine, is chopped, and is spread over the ground behind the combine.

A common problem when spreading MOG (such as straw) behind the agricultural harvester is accurately monitoring the spread of the MOG, particularly when there are strong prevailing winds. The MOG is thrown to the rear of the vehicle and the wind carries it from side to side.

Control systems are provided to monitor the spread of the MOG behind the agricultural harvester and to control fans, vanes, and other steering devices to ensure that the MOG is properly distributed on the ground behind the combine. These control systems typically include cameras or other sensors (herein "cameras") disposed to sense the characteristics and location of the residue in the field behind the agricultural harvester, such as described in US 2015/0264864 A1 showing a combine harvester with ultrasonic sensors mounted on the sides of the spreader and directed towards the rear and thus the spread material, and WO 2018/162699A1 with radar or ultrasonic sensors mounted on the sides of the spreader and directed towards the rear and thus the spread material, or EP 0 685 151 A1 with a laser sensor looking from the top to the spread material and EP 1 514 466 A2 with a camera looking from the top to the spread material.

The process of spreading MOG raises a lot of dust, however. This dust obscures the view of the cameras, and thus prevents the control system from accurately determining the spread of the MOG on the ground.

Furthermore, since these cameras or other sensors are located above the residue outlet and point downward, the cameras are confused by field clutter in the sensors' fields-of-view (rocks, sticks, clods of dirt, severed plant stalks, etc.). This clutter makes it hard to distinguish between residue laying on the ground, and features of the ground itself.

What is needed is a system for monitoring the spread of crop residue (e.g. MOG) that mitigates the effect of dust and ground clutter.

It is an object of this invention to provide such a monitoring system.

### Summary

An agricultural harvester is provided with a crop residue spread monitoring system, the agricultural harvester comprising a self-propelled agricultural harvesting vehicle with a threshing rotor supported in a grating, a chopper disposed to chop crop residue exiting the threshing rotor, and a spreading mechanism disposed to receive chopped material from the chopper and spread the chopped residue over the ground, wherein the crop residue spread monitoring system comprises at least one camera disposed below an exit of the spreading mechanism to image a plume of residue leaving the spreading mechanism from an underside of the plume of residue.

The at least one camera may be pointed to the rear of the agricultural harvester.

The at least one camera may be pointed at an angle of between plus fifteen and minus fifteen degrees with respect to the horizon.

The at least one camera may be pointed at an angle of between zero and plus ten degrees with respect to horizontal.

The at least one camera may be pointed at an angle of between zero and plus five degrees with respect to horizontal.

The at least one camera may be pointed at an angle of zero with respect to horizontal.

The system may comprise a second camera disposed below the exit of the spreading mechanism to image the plume of residue leaving the spreading mechanism from an underside of the plume of residue.

The at least one camera and the second camera may have respective fields of view and wherein the respective fields of view partially overlap.

The at least one camera and the second camera may be disposed on opposite sides of the spreading mechanism.

The agricultural harvester may further include an agricultural harvesting head mounted on the front of a harvesting vehicle, and a second camera may be disposed at a height below an exit of the spreading mechanism to image a plume of residue leaving the spreading mechanism is mounted on the agricultural harvesting head.

The second camera may be mounted on one side of the agricultural harvesting head and a third camera may be mounted on a side of the agricultural harvesting head that is opposite the one side, and the third camera may be positioned to image the plume of residue leaving the spreading mechanism.

The crop residue spread monitoring system may include at least one ECU connected to the at least one camera to receive image signals therefrom, and an electronic display coupled to the at least one ECU to display images from the at least one camera.

### Brief Description of the Drawings

Figure 1 is a side view of an agricultural harvester with a residue spread monitoring system in accordance with the present invention.
Figure 2 is a plan view of the agricultural harvester of Figure 1.
Figure 3 is a schematic diagram of the residue spread monitoring system of Figures 1-2.

### Detailed Description of the Preferred Embodiments

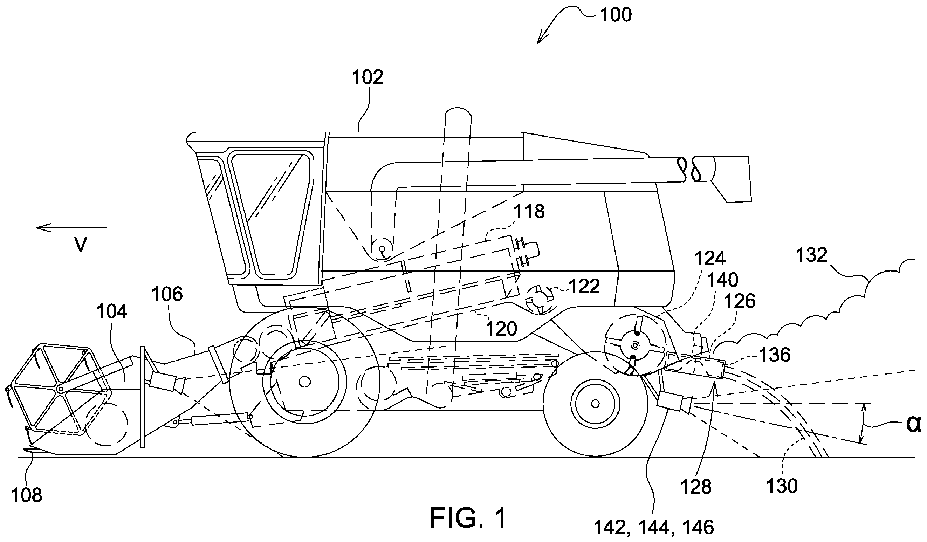

In Figure 1 an agricultural combine 100 is shown comprising a self-propelled agricultural harvesting vehicle 102 and an agricultural harvesting head 104 supported on the front of the agricultural harvesting vehicle 102. Agricultural harvesting vehicle 102 includes a feederhouse 106 that is coupled to the forward end of the agricultural harvesting vehicle 102 and to which is coupled the agricultural harvesting head 104.

The agricultural harvesting head 104 includes a reciprocating knife 108 that is fixed to and extends across the front of the agricultural harvesting head 104. Behind the reciprocating knife 108 is a conveyor system 110 which comprises a left side conveyor 112, right side conveyor 114 and a center conveyor 116. The left side conveyor 112 has an endless belt upon which material cut by the reciprocating knife falls. This cut crop material is carried inwardly toward a central region of the agricultural harvesting head. The right side conveyor 114 has an endless belt upon which material cut by the reciprocating knife falls. This cut crop material is carried inwardly toward central region of the agricultural harvesting head. The center conveyor is disposed between the left side conveyor 112 and the right side conveyor 114, receives crop from both, and carries it rearward into an opening at the forward end of the feederhouse 106. The feederhouse 106 includes an internal conveyor (not shown) that lifts the cut crop material up and carries it into the body of the agricultural harvesting vehicle 102. Once received in the body of the agricultural harvesting vehicle 102, the cut crop material is conveyed into a gap between an elongate rotor 118 and a concave grating 120. The cut crop material is threshed and separated between the rotor and the concave grating as the rotor rotates against the stationary concave grating.

Crop residue is carried rearward in the gap between the rotor and the concave grating until it exits adjacent to a beater 122. The residue is beaten by the beater 122 to separate any remaining kernels of grain from the residue. The residue then falls downward and rearward into a chopper 124. The chopper 124 comminutes the residue into smaller portions for easier distribution over the ground and easier digestion by microbes in the soil.

Comminuted crop residue is thrown rearward by the chopper 124 into a spreader mechanism 126. The spreader mechanism 126 may be a powered or non-powered spreading device. It may include one or more motor-driven rotating discs with paddles or vanes, or it may include stationary paddles or vanes that steer the residue laterally, from side to side. In either case, whether driven or non-driven, the spreader mechanism 126 spreads the crop residue out into a broad fan like pattern behind the agricultural harvesting vehicle 102.

The preferred spreader mechanism 126 includes two spinning discs 134, 136 driven by motors 138, 140. These spinning discs have downwardly extending vanes that engage the chopped residue and fling it outward and rearward to both sides of the agricultural harvesting vehicle 102.

Once released at the outlet of the spreader mechanism 126, the plume of residue 130 settles to the ground behind the agricultural harvesting vehicle 102.

The air mixed in with the residue produces a cloud of dust 132 that billows upward from the residue as the residue falls downward under the force of gravity onto the ground.

Cameras 142, 144 are mounted at the rear of the agricultural harvesting vehicle 102 on either side of the chopper 124 and the spreader mechanism 126 and below the outlet of the chopper 124 and the spreader mechanism 126.

Camera 146 is disposed in a central region of the agricultural harvesting vehicle 102 in a location between cameras 142, 144. Camera 146 is also disposed below the outlet of the chopper 124 and the spreader mechanism 126.

Cameras 142, 144, 146 are pointed toward the rear of the vehicle such that the plume of residue underneath the cloud of dust 132 is in the field of view of the cameras. In this manner, the cameras can directly view the underside of the falling plume of residue itself, in the air, and unblocked by the cloud of dust 132.

Cameras 142, 144, 146 point generally rearward in a horizontal plane, parallel to the ground, thereby imaging the plume of residue in the air, and not against a backdrop of the ground. This avoids the problem of the prior cameras which were fixed to an upper portion of the agricultural harvesting vehicle 102 and pointed downward toward the ground and the residue lying on the ground. Ground clutter in the imaging field of the cameras is substantially reduced with the cameras in this orientation.

The cameras 142, 144, 146 are preferably disposed such that the central axis of each camera's field of view is at an angle alpha (α) [Fig. 1] with respect to horizontal) between plus 15 degrees and minus 15 degrees ("plus" being above horizontal and "minus" being below horizontal). More preferably, angle alpha is between zero degrees (i.e. horizontal) and plus 5 degrees. More preferably, angle alpha is zero (i.e. horizontal).

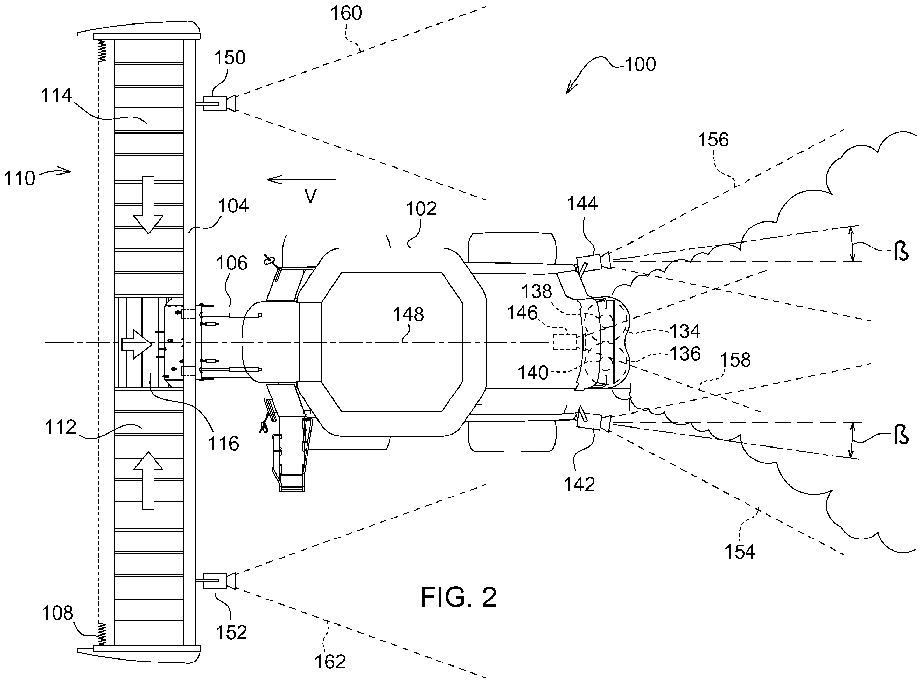

The cameras 142 and 144 are preferably disposed such that the central axis of each camera's field of view is at an angle beta (β) [Fig 2] with respect to a fore and aft plane (in plan view) of between zero (i.e. directly rearward) degrees and plus 45 degrees. More preferably, angle beta is between zero degrees and plus 30 degrees. More preferably, angle beta is between zero degrees and plus 15 degrees. An angle beta is positive ("plus") if the camera is turned outward in a direction away from the side of the vehicle on which it is mounted. By directing the cameras outward (see Fig. 2), the overlap of the camera fields of view can be reduced and more of the plume of residue can be included in the collective field of view of both cameras.

Cameras 142, 144, 146 are fixed in a position below the outlet of the chopper 124 and the spreader mechanism 126 so that the plume of residue above the ground is falling into the field of view of the cameras. They are preferably disposed with respect to each other such that cameras 142 and 144 have mutually overlapping fields of view 154, 156 and that the field of view 158 of camera 146 overlaps the fields of view of both cameras 142 and 144.

In one arrangement, the central camera 146 is used. In another arrangement the cameras 142, 144 located on either side of (and below) the chopper 124 and the spreader mechanism 126 are used. In another arrangement, all three are used.

When cameras 142, 144 are used, they are preferably angled outward at the angle beta (β) with respect to a central, longitudinal, fore-and-aft plane 148.

Two additional cameras 150, 152 are provided on the agricultural harvester 100. Camera 150 is provided on the right-hand side of the agricultural harvesting head 104, and camera 152 is provided on the left-hand side of the agricultural harvesting head 104. Camera 150 has a field-of-view 160 and camera 152 has a field-of-view 162.

The field-of-view 160 of camera 150 extends outside of the field-of-view 156 of camera 144 in the vicinity of the plume of residue. In this way, camera 150 overlaps and extends the field-of-view of camera 144.

In a similar fashion, the field-of-view 162 of camera 152 extends outside of the field-of-view 154 of camera 142. Likewise, camera .152 overlaps and extends the field-of-view of camera 142.

The overlapping fields of view of the cameras 142, 144, 146, 150, 152 at the rear of the agricultural harvester 100 permit the system to image substantially the entire width of the plume of residue falling from the agricultural harvester 100.

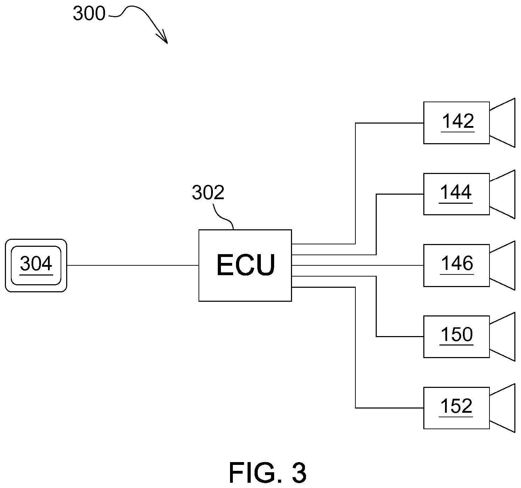

The cameras 142, 144, 146, 150, 152 are digital cameras that produce digital signals representing images of the plume of residue within their fields of view. The cameras are coupled to one of more networked electronic control units (represented in Figure 3 as ECU 302). The networked electronic control units 302 are configured to receive images of the plume of residue from each of the cameras and to transmit those images to a display unit 304 disposed in the operator cabin of the vehicle. The networked electronic control units 302 are also configured to extract physical characteristics of the plume of residue from the images. These characteristics include the width of the plume and where the plume is falling on the ground behind the agricultural harvester 100 -- e.g. how far to the right and/or how far to the left of the agricultural harvester 100.

With this information, other ECUs and actuators can steer the spreader mechanism 126 to direct the plume of residue across the ground in a more even distribution.

Collectively, the cameras, networked ECUs and display are a residue spread monitoring system 300.

The claims below define the invention. The description and figures above are provided to enable one skilled in the art to make and use the invention. Other ways of making and using the invention will be apparent to those skilled in the art.

## Claims

1. An agricultural harvester (100) with crop residue spread monitoring system (300), the agricultural harvester (100) comprising a self-propelled agricultural harvesting vehicle (102) with a threshing rotor (118) supported in a grating, a chopper (124) disposed to chop crop residue exiting the threshing rotor (118), and a spreader mechanism (126) disposed to receive chopped material from the chopper (124) and spread the chopped residue over the ground, wherein the crop residue spread monitoring system (300) comprises at least one camera (142, 144, 146, 150, 152), **characterized in that** the camera (142, 144, 146, 150, 152) is disposed below or adjacent an exit of the spreader mechanism (126), said camera being configured to image a plume of residue leaving the spreader mechanism (126) from an underside of the plume of residue.

2. The harvester (100) of claim 1 wherein the at least one camera (142, 144, 146, 150, 152) is pointed to the rear of the agricultural harvester (100).

3. The harvester (100) of claim 1 further comprising a second camera (142, 144, 146, 150, 152) disposed below the exit of the spreader mechanism (126) to image the plume of residue leaving the spreader mechanism (126) from an underside of the plume of residue.

4. The harvester (100) of claim 3 wherein the at least one camera (142, 144, 146, 150, 152) and the second camera (142, 144, 146, 150, 152) have respective fields of view and wherein the respective fields of view partially overlap.

5. The harvester (100) of claim 3 wherein the at least one camera (142, 150) and the second camera (146, 152) are disposed on opposite sides of the spreader mechanism (126).

6. The harvester (100) of claim 1, wherein the agricultural harvester (100) further comprises an agricultural harvesting head (104) mounted on the front of a harvesting vehicle (102), and further wherein a second camera (150, 152) disposed below an exit of the spreader mechanism (126) and configured to image a plume of residue leaving the spreader mechanism (126) is mounted on the agricultural harvesting head (104).

7. The harvester (100) system of claim 4, wherein the second camera (150) is mounted on one side of the agricultural harvesting head (104) and a third camera (152) is mounted on a side of the agricultural harvesting head (104) that is opposite the one side, and further wherein the third camera (152) is positioned to image the plume of residue leaving the spreader mechanism (126).

8. The harvester (100) of claim 1 further comprising at least one ECU (302) connected to the at least one camera (142, 144, 146, 150, 152) to receive image signals therefrom; and an electronic display (304) coupled to the at least one ECU (302) to display images from the at least one camera (142, 144, 146, 150, 152).

## Patentansprüche

1. Landwirtschaftliche Erntemaschine (100) mit einem Erntegutrückstandverteilungsüberwachungssystem (300), wobei die landwirtschaftliche Erntemaschine (100) ein selbstfahrendes landwirtschaftliches Erntefahrzeug (102) mit einem Dreschrotor (118), der in einem Gitter getragen ist, einem Häcksler (124), der angeordnet ist, aus dem Dreschrotor (118) austretenden Erntegutrückstand zu häckseln, und einem Verteilermechanismus (126), der angeordnet ist, gehäckseltes Material von dem Häcksler (124) aufzunehmen und den gehäckselten Rückstand über den Boden zu verteilen, umfasst, wobei das Erntegutrückstandverteilungsüberwachungssystem (300) mindestens eine Kamera (142, 144, 146, 150, 152) umfasst, **dadurch gekennzeichnet, dass** die Kamera (142, 144, 146, 150, 152) unter oder angrenzend an einen Austritt des Verteilermechanismus (126) angeordnet ist, wobei die Kamera ausgestaltet ist, eine Wolke von den Verteilermechanismus (126) verlassendem Rückstand von einer Unterseite der Wolke von Rückstand aufzunehmen.

2. Erntemaschine (100) nach Anspruch 1, wobei die mindestens eine Kamera (142, 144, 146, 150, 152) zum Heck der landwirtschaftlichen Erntemaschine (100) zeigt.

3. Erntemaschine (100) nach Anspruch 1, ferner umfassend eine zweite Kamera (142, 144, 146, 150, 152), die unter dem Austritt des Verteilermechanismus (126) angeordnet ist, um die Wolke von den Verteilermechanismus (126) verlassendem Rückstand von einer Unterseite der Wolke von Rückstand aufzunehmen.

4. Erntemaschine (100) nach Anspruch 3, wobei die mindestens eine Kamera (142, 144, 146, 150, 152) und die zweite Kamera (142, 144, 146, 150, 152) jeweilige Sichtfelder aufweisen und wobei sich die jeweiligen Sichtfelder teilweise überlappen.

5. Erntemaschine (100) nach Anspruch 3, wobei die mindestens eine Kamera (142, 150) und die zweite Kamera (146, 152) an entgegengesetzten Seiten des Verteilermechanismus (126) angeordnet sind.

6. Erntemaschine (100) nach Anspruch 1, wobei die landwirtschaftliche Erntemaschine (100) ferner einen landwirtschaftlichen Erntevorsatz (104) umfasst, das an der Front eines Erntefahrzeugs (102) angebracht ist, und ferner wobei eine zweite Kamera (150, 152), die unter einem Austritt des Verteilermechanismus (126) angeordnet und ausgestaltet ist, eine Wolke von den Verteilermechanismus (126) verlassendem Rückstand aufzunehmen, an dem landwirtschaftlichen Erntevorsatz (104) angebracht ist.

7. Erntemaschinesystem (100) nach Anspruch 4, wobei die zweite Kamera (150) an einer Seite des landwirtschaftlichen Erntevorsatzes (104) angebracht ist und eine dritte Kamera (152) an einer Seite des landwirtschaftlichen Erntevorsatzes (104) angebracht ist, die der einen Seite gegenüber liegt, und ferner wobei die dritte Kamera (152) positioniert ist, die Wolke von den Verteilermechanismus (126) verlassendem Rückstand aufzunehmen.

8. Erntemaschine (100) nach Anspruch 1, ferner umfassend mindestens eine ECU (302), die mit der mindestens einen Kamera (142, 144, 146, 150, 152) verbunden ist, um Bildsignale davon zu empfangen; und eine mit der mindestens einen ECU (302) gekoppelte elektronische Anzeige (304), um Bilder von der mindestens einen Kamera (142, 144, 146, 150, 152) anzuzeigen.

## Revendications

1. Moissonneuse-batteuse agricole (100) avec un système de surveillance d'épandage de résidu de culture (300), la moissonneuse-batteuse agricole (100) comprenant un véhicule de moissonnage agricole autopropulsé (102) avec un rotor de battage (118) supporté dans une grille, une hacheuse (124) disposée pour hacher un résidu de culture sortant du rotor de battage (118), et un mécanisme épandeur (126) disposé pour recevoir une matière hachée à partir de la hacheuse (124) et épandre le résidu haché sur le sol, dans laquelle le système de surveillance d'épandage de résidu de culture (300) comprend au moins une caméra (142, 144, 146, 150, 152), **caractérisée en ce que** la caméra (142, 144, 146, 150, 152) est disposée en dessous d'une sortie du mécanisme épandeur (126), ou de façon adjacente à celle-ci, ladite caméra étant configurée pour imager un souffle de résidu quittant le mécanisme épandeur (126) à partir d'un côté inférieur du souffle de résidu.

2. Moissonneuse-batteuse (100) selon la revendication 1, dans laquelle l'au moins une caméra (142, 144, 146, 150, 152) est orientée vers l'arrière de la moissonneuse-batteuse agricole (100).

3. Moissonneuse-batteuse (100) selon la revendication 1, comprenant en outre une deuxième caméra (142, 144, 146, 150, 152) disposée en dessous de la sortie du mécanisme épandeur (126) pour imager le souffle de résidu quittant le mécanisme épandeur (126) à partir d'un côté inférieur du souffle de résidu.

4. Moissonneuse-batteuse (100) selon la revendication 3, dans laquelle l'au moins une caméra (142, 144, 146, 150, 152) et la deuxième caméra (142, 144, 146, 150, 152) ont des champs de vue respectifs et dans laquelle les champs de vue respectifs se chevauchent partiellement.

5. Moissonneuse-batteuse (100) selon la revendication 3, dans laquelle l'au moins une caméra (142, 150) et la deuxième caméra (146, 152) sont disposées sur des côtés opposés du mécanisme épandeur (126).

6. Moissonneuse-batteuse (100) selon la revendication 1, dans laquelle la moissonneuse-batteuse agricole (100) comprend en outre une tête de moissonnage agricole (104) montée sur l'avant d'un véhicule de moissonnage (102), et en outre dans laquelle une deuxième caméra (150, 152) disposée en dessous d'une sortie du mécanisme épandeur (126) et configurée pour imager un souffle de résidu quittant le mécanisme épandeur (126) est montée sur la tête de moissonnage agricole (104).

7. Système de moissonneuse-batteuse (100) selon la revendication 4, dans lequel la deuxième caméra (150) est montée sur un côté de la tête de moissonnage agricole (104) et une troisième caméra (152) est montée sur un côté de la tête de moissonnage agricole (104) qui est opposé à l'un côté, et en outre dans lequel la troisième caméra (152) est positionnée pour imager le souffle de résidu quittant le mécanisme épandeur (126).

8. Moissonneuse-batteuse (100) selon la revendication 1 comprenant en outre au moins une ECU (302) connectée à l'au moins une caméra (142, 144, 146, 150, 152) pour recevoir des signaux d'image à partir de celle-ci ; et un écran d'affichage électronique (304) couplé à l'au moins une ECU (302) pour afficher des images provenant de l'au moins une caméra (142, 144, 146, 150, 152) .
